# EUROPEAN PATENT APPLICATION

(11) **EP 4 841 992 A1**
(43) Date of publication of application: **18.11.2026**
(21) Application number: 25738398.4
(22) Date of filing: 07.01.2025
(51) Int. Cl.: H04N 21/2187

(54) **INFORMATION PRESENTATION METHOD AND APPARATUS, AND DEVICE AND STORAGE MEDIUM**

(30) Priority: 08.01.2024 CN 202410027838
(71) Applicant: BEIJING YOUZHUJU NETWORK TECHNOLOGY CO. LTD., Beijing 101299 (CN)
(72) Inventor: LV, Changfu, Beijing 100028 (CN); ZHANG, Yan, Beijing 100028 (CN); ZHANG, Hanyin, Beijing 100028 (CN); LIU, Shuning, Beijing 100028 (CN); ZHANG, Wenbin, Beijing 100028 (CN); ZHOU, Changhe, Beijing 100028 (CN); JI, Xiang, Beijing 100028 (CN); SHI, Qiankun, Beijing 100028 (CN); XIA, Siyuan, Beijing 100028 (CN); XU, Linzhi, Beijing 100028 (CN); ZHANG, Qi, Beijing 100028 (CN); CHEN, Hao, Beijing 100028 (CN); HE, Peng, Beijing 100028 (CN); LI, Chao, Beijing 100028 (CN); CHEN, Shian, Beijing 100028 (CN); SUN, Lei, Beijing 100028 (CN); CAO, Runzhe, Beijing 100028 (CN); YAO, Jialu, Beijing 100028 (CN); QIAO, Chong, Beijing 100028 (CN)
(74) Representative: Isarpatent
(86) International application number: PCT/CN2025/071005
(87) International publication number: WO 2025/148867

(57) **Abstract**

Provided in the embodiments of the present disclosure are an information presentation method and apparatus, and a device and a storage medium. The information presentation method comprises: in response to interaction information that is input into an interaction interface, presenting interaction reply information in the interaction interface, wherein the interaction reply information comprises reply text information and recommendation information of at least one recommended object corresponding to the reply text information, and the recommendation information of the at least one recommended object is determined on the basis of the interaction information and the reply text information. Since personalized reply text information can be displayed by means of interaction information and reply text information, and a plurality of types of recommendation information are provided to users, it is convenient to find, on the basis of the reply text information and the recommendation information, objects that meet the requirements of the users, thereby improving the user experience.

## Description

The present application claims priority to Chinese Patent Application No. 202410027838.3, filed on January 8, 2024, which is incorporated herein by reference in its entirety as a part of the present application.

### TECHNICAL FIELD

Embodiments of the present disclosure relate to an information display method and apparatus, a device, and a storage medium.

### BACKGROUND

With the development of Internet technology, more and more merchants choose to launch products on Internet live-streaming applications, and users may purchase products through the Internet live-streaming applications.

For example, when a user intends to purchase a product, the user may input a name of the product that the user intends to purchase, for example, a mobile phone XX, on a product search interface of a live streaming application; a purchase entry corresponding to the mobile phone XX is displayed on a search result interface; and the user may purchase the product through the purchase entry corresponding to the mobile phone XX.

However, the inventor(s) found that at least the following technical problem exists: when users purchase products through live streaming applications, they may not be able to find products they are interested in. This causes the users to spend a long time searching for their favorite products, and reduces the users' experience.

### SUMMARY

Embodiments of the present disclosure provide an information display method and apparatus, a device, and a storage medium, which may improve the efficiency of a user searching for a favorite object, thereby improving the user experience.

In a first aspect, an embodiment of the present disclosure provides an information display method, including:
displaying interactive reply information in an interactive interface in response to interactive information that is input in the interactive interface, where the interactive reply information includes reply text information and recommendation information of at least one recommended object corresponding to the reply text information; and
the recommendation information of the at least one recommended object is determined based on the interactive information and the reply text information.

In a second aspect, an embodiment of the present disclosure provides an information display apparatus, including:
a displaying module, configured to display interactive reply information in an interactive interface in response to interactive information that is input in the interactive interface, where the interactive reply information includes reply text information and recommendation information of at least one recommended object corresponding to the reply text information; and
the recommendation information of the at least one recommended object is determined based on the interactive information and the reply text information.

In a third aspect, an embodiment of the present disclosure provides an electronic device, including:
a processor, and a memory communicatively connected to the processor;
the memory stores a computer-executable instruction; and
the processor executes the computer-executable instruction stored in the memory to implement the information display method according to the above first aspect.

In a fourth aspect, an embodiment of the present disclosure provides a computer-readable storage medium, where a computer-executable instruction is stored in the computer-readable storage medium, and when the computer-executable instruction is executed by a processor, the information display method according to the above first aspect is implemented.

In a fifth aspect, an embodiment of the present disclosure provides a computer program product, including a computer program, and when the computer program is executed by a processor, the information display method according to the above first aspect is implemented.

### BRIEF DESCRIPTION OF DRAWINGS

In order to more clearly illustrate the technical solutions in the embodiments of the present disclosure, the drawings required in describing the embodiments will be briefly introduced below. Apparently, the drawings in the following description are some embodiments of the present disclosure, and for those skilled in the art, other drawings may also be obtained from these drawings without any inventive work.
Fig. 1 is a schematic diagram of an application scenario of an information display method;
Fig. 2 is a schematic diagram of an application scenario of an information display method provided in an embodiment of the present disclosure;
Fig. 3 is a flowchart of an information display method provided in an embodiment of the present disclosure;
Fig. 4 is a schematic diagram of a display manner of interactive reply information provided in an embodiment of the present disclosure;
Fig. 5 is a schematic diagram of another display manner of interactive reply information provided in an embodiment of the present disclosure;
Fig. 6 is a schematic diagram of another display manner of interactive reply information provided in an embodiment of the present disclosure;
Fig. 7 is a flowchart of another information display method provided in an embodiment of the present disclosure;
Fig. 8 is a schematic diagram of an interactive search identification provided in an embodiment of the present disclosure;
Fig. 9 is a structural block diagram of an information display apparatus provided in an embodiment of the present disclosure; and
Fig. 10 is a schematic diagram of a hardware structure of an electronic device provided in an embodiment of the present disclosure.

### DETAILED DESCRIPTION

In order to make the objectives, technical solutions, and advantages of the embodiments of the present disclosure clearer, the technical solutions in the embodiments of the present disclosure will be described clearly and comprehensively with reference to the drawings in the embodiments of the present disclosure. Apparently, the described embodiments are only some embodiments of the present disclosure, rather than all the embodiments. All other embodiments obtained by those skilled in the art based on the embodiments of the present disclosure without any inventive work shall fall within the scope of protection of the present disclosure.

It should be noted that the user information (including but not limited to user device information, user personal information, etc.) and data (including but not limited to data for analysis, stored data, displayed data, etc.) involved in the present disclosure are information and data authorized by the user or fully authorized by all parties, and the collection, use, and processing of the relevant data need to comply with the relevant laws, regulations, and standards, and a corresponding operation entry is provided for the user to choose to authorize or reject.

With the development of Internet technology, more and more merchants choose to launch products on Internet live streaming applications, and users may purchase products through the Internet live streaming applications.

For example, when a user intends to purchase a product, the user may input a name of the product that the user intends to purchase, for example, a mobile phone XX, on a product search interface of a live streaming application; a purchase entry corresponding to the mobile phone XX is displayed on a search result interface; and the user may purchase the product through the purchase entry corresponding to the mobile phone XX.

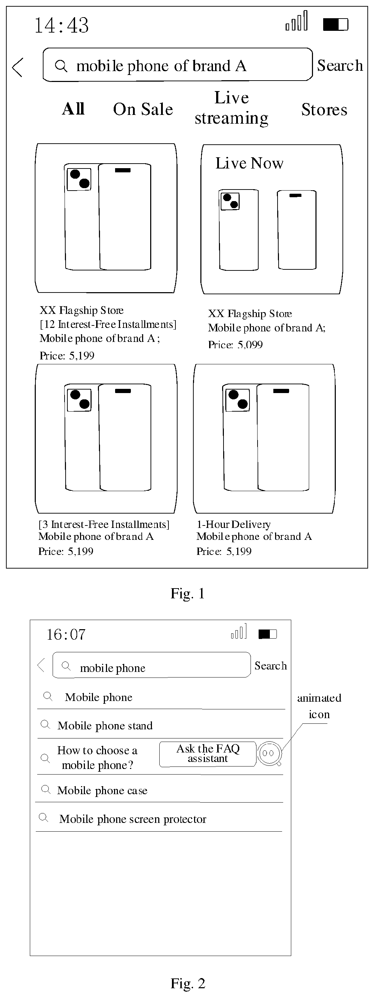

Fig. 1 is a schematic diagram of an application scenario of an information display method. A user may input "a mobile phone of brand A" on a product search interface. Multiple purchase entries corresponding to mobile phones of brand A are displayed on a search result interface. The user may purchase the product through the purchase entry corresponding to the mobile phone of brand A.

However, when the user purchases a product through a live streaming application, the search result interface only includes the purchase entry, and the displayed information is relatively single. The user may not be able to find the product of interest, which causes the user to spend a long time searching for a favorite product, and reduces the user experience.

It may be seen that how to enable the user to quickly find an object of interest to improve the user experience is an urgent technical problem to be solved.

In order to solve the above problem, the present embodiment proposes the following technical conception: when the user searches for a product, an interactive search identification (for example, an AI animated icon) may be displayed on a recommendation search interface. The user may click on the animated icon to recommend, through an intelligent algorithm model, a product that the user intends to purchase.

A specific method may include: displaying interactive reply information in an interactive interface in response to interactive information that is input in the interactive interface, where the interactive reply information includes reply text information and recommendation information of at least one recommended object corresponding to the reply text information, and the recommendation information of the at least one recommended object is determined based on the interactive information and the reply text information.

In this case, since the personalized reply text information may be displayed through the interactive information and the reply text information, and since various recommendation information is provided for the user, it is convenient to search for an object that meets the user's needs according to the reply text information and the recommendation information, thus improving the user experience.

The following explains the application scenario of the embodiments of the present disclosure.

The information display method provided in the embodiments of the present disclosure may be applied to various application scenarios of recommendation information display. Fig. 2 is a schematic diagram of an application scenario of an information display method provided in an embodiment of the present disclosure. As shown in Fig. 2, when a user searches for a product, an AI animated icon may be displayed on a recommendation search interface. The user may click on the animated icon to get an answer of "how to choose a mobile phone" through an intelligent algorithm model, and products are recommended to the user for purchase. The following describes the information display method provided in the embodiments of the present disclosure in detail with detailed embodiments.

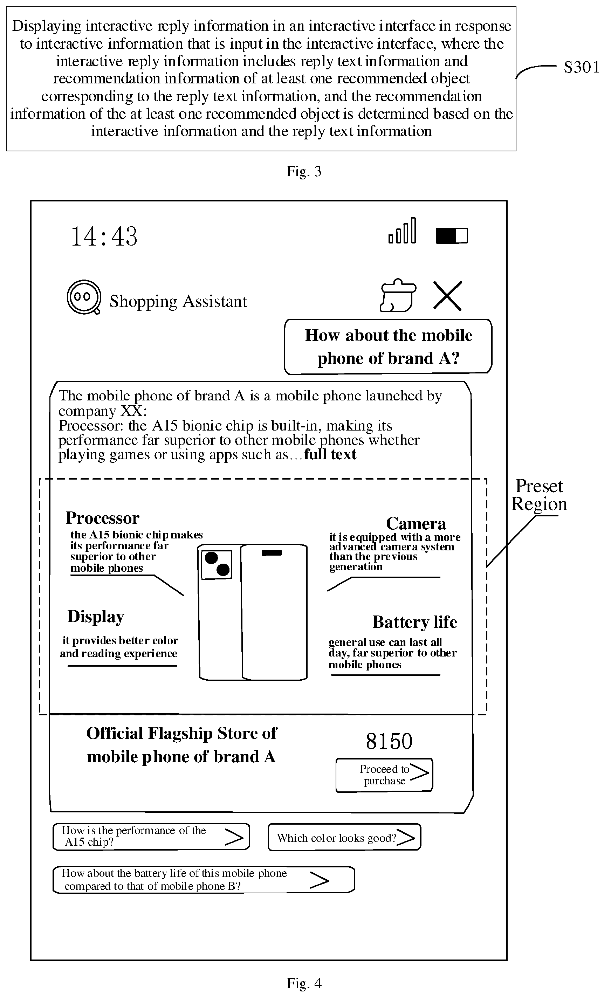

Fig. 3 is a flowchart of an information display method provided in an embodiment of the present disclosure. In the present embodiment, the execution body of the information display method is an electronic device as an example for description. Referring to Fig. 3, the method includes:
S301, displaying interactive reply information in an interactive interface in response to interactive information that is input in the interactive interface, where the interactive reply information includes reply text information and recommendation information of at least one recommended object corresponding to the reply text information, and the recommendation information of the at least one recommended object is determined based on the interactive information and the reply text information.

In the embodiment of the present disclosure, the interactive information may represent a shopping intention of a user. Optionally, the interactive information includes a first recommended object, which may represent a shopping intention for a certain single product. For example, the interactive information includes: how about the mobile phone of brand A. Optionally, the interactive information includes an object type, which may represent a shopping intention for a certain category. For example, the interactive information includes: how to choose a jacket shell. Optionally, the interactive information includes a scenario type, which may represent a shopping intention in a certain scenario. For example, the interactive information includes: what to buy for camping.

Optionally, for different interactive information, display manners of the interactive reply information are also different. The following illustrates the display manners of the interactive reply information with three cases.

In a first case, the interactive information includes a first recommended object, the recommendation information of the at least one recommended object includes recommendation information corresponding to the first recommended object, and the recommendation information includes a recommendation image and multiple recommendation texts. Correspondingly, the displaying the interactive reply information in the interactive interface includes: displaying the recommendation information corresponding to the first recommended object in a preset region of the interactive interface, where the recommendation image corresponding to the first recommended object is located in a middle of the preset region, and the multiple recommendation texts corresponding to the first recommended object are located around the recommendation image. Each of the recommendation texts corresponds to one piece of attribute information of the first recommended object, and attribute information corresponding to each of the recommendation texts is different.

In some embodiments, the multiple recommendation texts may include configuration attribute information, evaluation information, user attention information, blogger recommendation information, and the like.

Optionally, the reply text information includes details introduction information of multiple different attributes of the first recommended object. The attribute information may be summary information corresponding to the details introduction information. Correspondingly, the multiple pieces of attribute information of the first recommended object may be determined according to the details introduction information of the multiple different attributes of the first recommended object, to obtain the multiple recommendation texts corresponding to the first recommended object. Each piece of attribute information may be summary information corresponding to the details introduction information of one attribute.

Exemplarily, the first recommended object is a mobile phone, and the details introduction information corresponding to the multiple different attributes includes details introduction information of a processor of the mobile phone, details introduction information of a camera of the mobile phone, details introduction information of a display of the mobile phone, and details introduction information of battery life of the mobile phone. The details introduction information of the processor of the mobile phone includes: "Processor: an A15 bionic chip is built in, making its performance far superior to that of other mobile phones, and it can run smoothly whether playing games or using many software programs". The attribute information of the processor of the mobile phone may be: "the A15 bionic chip is built in, making its performance far superior to that of other mobile phones".

Exemplarily, as shown in Fig. 4, the first recommended object is a mobile phone of brand A. The recommendation information corresponding to the first recommended object may include an introduction summary (configuration attribute information) of the mobile phone of brand A, which is located around an image of the mobile phone of brand A. The configuration attribute information of the mobile phone of brand A includes: a processor, the A15 bionic chip makes its performance far superior to that of other mobile phones; a camera, which is equipped with a more advanced camera system than the previous generation; a display, which provides better color and reading effects; and battery life, which may generally be maintained for a whole day and far superior to that of other mobile phones.

Exemplarily, the first recommended object is a lipstick of brand B. The recommendation information corresponding to the first recommended object may include an introduction summary of the lipstick of brand B, which is located around an image of the lipstick of brand B. The introduction summary of the lipstick of brand B includes configuration attribute information (finish: moisturizing satin finish), evaluation information (mentioned by bloggers: mentioned by more than 800 bloggers in their videos), user attention information (recommendation: the product has been recommended by more than 300 fair-skinned people), and blogger recommendation information (blogger XX: recommended by a blogger with 2 million followers).

Exemplarily, the first recommended object is a jacket shell of brand C. The recommendation information corresponding to the first recommended object may include an introduction summary of the jacket shell of brand C, which is located around an image of the jacket shell of brand C. The introduction summary of the jacket shell of brand C includes configuration attribute information (material composition: 100% cotton texture), evaluation information (Maillard style: mentioned by more than 30,000 fashion bloggers as a popular trend this summer), user attention information (same style as xx celebrity: street dance celebrity outfits), and blogger recommendation information (blogger XX: recommended by a blogger I follow).

In some embodiments, the interactive reply information further includes object identification information of the first recommended object. Correspondingly, the method further includes: displaying the object identification information below the preset region; and displaying an object information interface of the first recommended object in response to detecting a trigger operation on the object identification information, where the object information interface is used to display multiple pieces of object attribute information of the first recommended object.

The object identification information may distinguish different first recommended objects. Exemplarily, as shown in Fig. 4, the object identification information of the first recommended object is: an ordering entry of an official flagship store of the mobile phone of brand A.

Optionally, the object attribute information may be introduction information of the first recommended object. For example, the object attribute information may be details introduction information of the first recommended object, and the object information interface may be a details introduction interface of the first recommended object. For another example, the object attribute information may be ordering information of the first recommended object, where the ordering information may include information such as a model and a price of the first recommended object. In this case, the object information interface may be an ordering interface of the first recommended object. For another example, the object attribute information may be shopping cart information of the first recommended object, and the shopping cart information may include a model, a price, etc. of the first recommended object. The object information interface may be a shopping cart interface added with the first recommended object.

In this case, since the recommendation image corresponding to the first recommended object is located in the middle of the preset region, and since the multiple recommendation texts corresponding to the first recommended object are located around the recommendation image, multiple pieces of information may be efficiently carried through a radar chart structure, advantages of the object are easy to present, with higher reading efficiency, which facilitates the user to find, according to the recommendation information, the object that meets the user's needs, thus improving the user experience.

In some embodiments, the reply text information includes details introduction information corresponding to the first recommended object. Correspondingly, the method further includes: displaying the details introduction information above the preset region, where the details introduction information includes text introduction information and/or video introduction information; determining a number of lines of the details introduction information if the details introduction information includes the text introduction information, displaying, above the preset region, the details introduction information with the number of lines if the number of lines is less than a preset number of lines, and displaying, above the preset region, first N lines of the details introduction information and an expansion identification if the number of lines is greater than or equal to the preset number of lines, and displaying a details introduction interface and displaying the details introduction information in the details introduction interface in response to detecting a trigger operation on the expansion identification, where N is a positive integer.

Exemplarily, as shown in Fig. 4, the first three lines of the details introduction information and the expansion identification (full text) are displayed above the preset region; and all the details introduction information is displayed in response to detecting the trigger operation on the expansion identification (full text).

In this case, since the details introduction information is displayed above the preset region, it is convenient for the user to quickly know about the first recommended object, and the efficiency of determining whether the first recommended object meets the user's needs is improved, thus improving the user experience.

In a second case, the interactive information includes an object type, and the recommendation information of the at least one recommended object includes object identification information respectively corresponding to at least two second recommended objects. Correspondingly, the displaying the interactive reply information in the interactive interface includes: displaying, in the interactive interface, the object identification information respectively corresponding to the at least two second recommended objects; and displaying, in response to detecting a trigger operation on any piece of the object identification information, an object information interface of a second recommended object corresponding to the object identification information, where the object information interface is used to display multiple pieces of object attribute information of the second recommended object.

In some embodiments, the interactive information may include one or more object types.

Optionally, the interactive information includes one object type, and the at least two second recommended objects belong to the same object type.

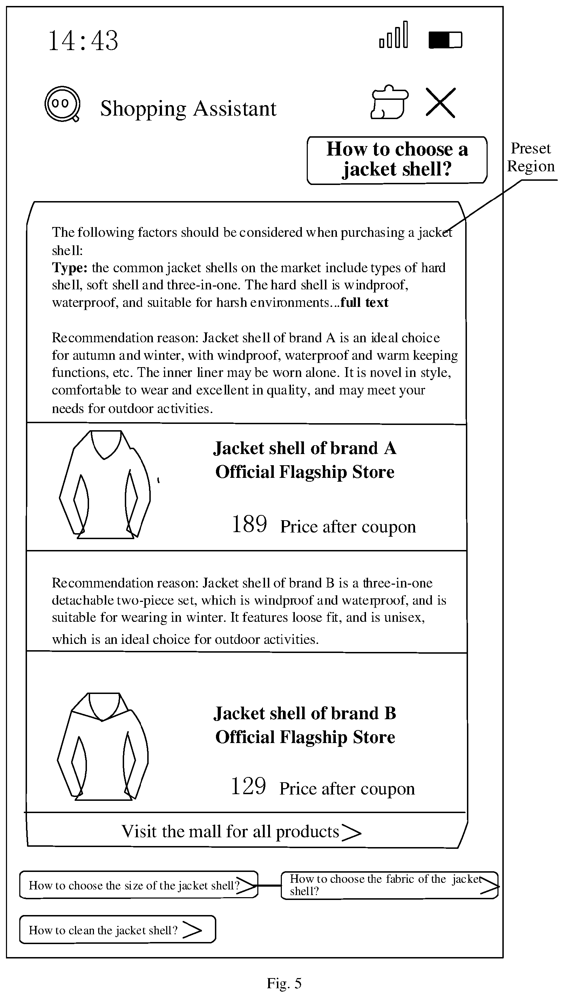

Exemplarily, as shown in Fig. 5, the object type is: how to choose a jacket shell. Object identification information of a jacket shell of brand A and object identification information of a jacket shell of brand B are displayed in the interactive interface. In this case, the user may compare two products of the same object type and select a product that meets the user's needs from the two products.

Optionally, the interactive information includes multiple object types, and the at least two second recommended objects belong to different object types. Exemplarily, the object type is: which is suitable for breakfast, oatmeal or milk. Object identification information of oatmeal of brand A and object identification information of milk of brand B are displayed in the interactive interface. In this case, the user may compare two products of different object types and select a product that meets the user's needs from the two products.

In some embodiments, the reply text information includes recommendation text information of each of the second recommended objects and/or details introduction information corresponding to the object type. Correspondingly, the displaying the interactive reply information in the interactive interface includes: displaying, in a preset region of the interactive interface, the object identification information respectively corresponding to the at least two second recommended objects and the recommendation text information of each of the second recommended objects; or displaying, in the preset region of the interactive interface, the object identification information respectively corresponding to the at least two second recommended objects and the details introduction information corresponding to the object type; or displaying, in the preset region of the interactive interface, the object identification information respectively corresponding to the at least two second recommended objects, the recommendation text information of each of the second recommended objects, and the details introduction information corresponding to the object type. The details introduction information corresponding to the object type is located on an upper portion of the preset region, and the recommendation text information of each of the second recommended objects is located above the object identification information corresponding to the second recommended object.

Optionally, the preset region is a display region where the interactive reply information is located (different from the preset region in the first case). Exemplarily, as shown in Fig. 5, the object type is: how to choose a jacket shell. The details introduction information corresponding to the object type includes: the following factors need to be considered when purchasing a jacket shell. Type: common jacket shells on the market include hard shell, soft shell, and three-in-one. The details introduction information corresponding to the object type is located on the upper portion of the preset region.

Optionally, the recommendation text information of each of the second recommended objects is located above the object identification information corresponding to the second recommended object. As shown in Fig. 5, the recommendation text information includes a recommendation reason. The second recommended objects include the jacket shell of brand A and the jacket shell of brand B, the recommendation reason for the jacket shell of brand A is located above the object identification information of the jacket shell of brand A, and the recommendation reason for the jacket shell of brand B is located above the object identification information of the jacket shell of brand B.

In this case, since the object identification information respectively corresponding to the at least two second recommended objects is displayed in the interactive interface, the user may directly compare the multiple recommended objects, which facilitates the user to quickly select the object that meets the user's needs, thus improving the user experience.

In a third case, the interactive information includes a scenario type, and the recommendation information of the at least one recommended object includes object identification information respectively corresponding to at least one third recommended object corresponding to the scenario type. Correspondingly, the displaying the interactive reply information in the interactive interface includes: displaying, in a preset region of the interactive interface, the object identification information respectively corresponding to the at least one third recommended object corresponding to the scenario type; and displaying, in response to detecting a trigger operation on any piece of the object identification information, an object information interface of a third recommended object corresponding to the object identification information, where the object information interface is used to display multiple pieces of object attribute information of the third recommended object.

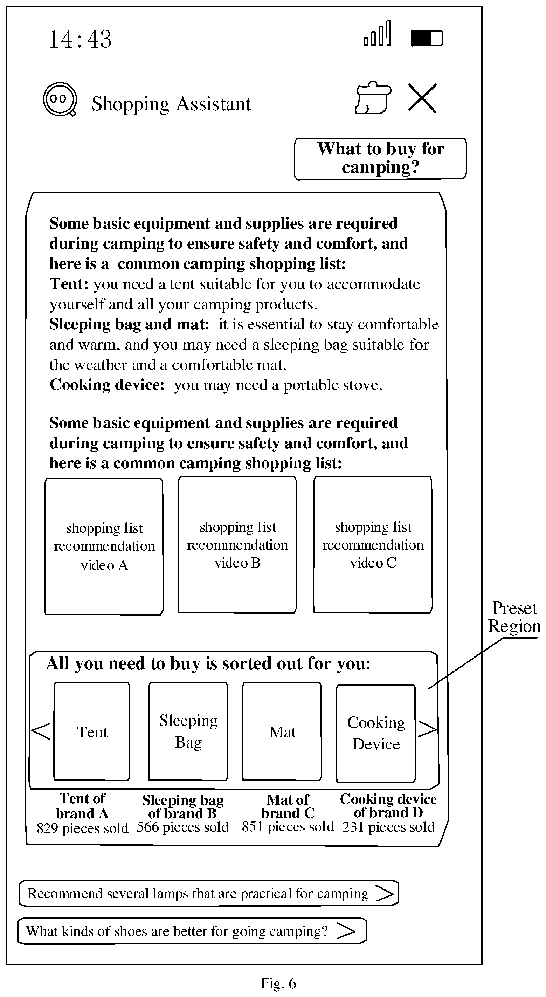

Exemplarily, as shown in Fig. 6, the scenario type is: what to buy for camping. The at least one third recommended object includes: a tent, a sleeping bag, a mat, and a cooking device.

In this case, since the object identification information respectively corresponding to the at least one third recommended object corresponding to the scenario type is displayed in the preset region of the interactive interface, the user may browse multiple products that meet the needs on the interactive interface, thus improving the user experience.

In some embodiments, a number of the at least one third recommended object is greater than a preset number. The method further includes: displaying, in the preset region, object identification information of a preset number of third recommended objects, and switching the displayed object identification information of the preset number of third recommended objects in response to detecting a preset operation on the preset region. In the embodiment of the present disclosure, a value of the preset number is not specifically limited. Exemplarily, as shown in Fig. 6, the preset number may be four.

Optionally, the preset operation may include a first preset operation and a second preset operation. Correspondingly, the switching the displayed object identification information of the preset number of third recommended objects includes: moving, in response to detecting the first preset operation on the preset region, the object identification information respectively corresponding to the at least one third recommended object in a first preset direction; and moving, in response to detecting the second preset operation on the preset region, the object identification information respectively corresponding to the at least one third recommended object in a second preset direction. The first preset direction is opposite to the second preset direction.

Exemplarily, the first preset operation may be a rightward swipe operation, and the first preset direction is a right direction. The second preset operation may be a leftward swipe operation, and the second preset direction is a left direction.

In some other embodiments, the reply text information includes details introduction information corresponding to the scenario type. Correspondingly, the method further includes: displaying, in a details introduction region of the interactive interface, the details introduction information corresponding to the scenario type, where the details introduction information includes text introduction information and/or video introduction information, displaying the video introduction information in a first region of the details introduction region and/or displaying the text introduction information in a second region of the details introduction region.

Exemplarily, as shown in Fig. 6, the details introduction information includes the text introduction information and the video introduction information. The text introduction information includes: some basic equipment and supplies are required during camping to ensure safety and comfort, and here is a list of some common camping shopping. Tent: you need a tent suitable for you to accommodate you and all your camping products. Sleeping bag and mat: it is essential to stay comfortable and warm, and you may need a sleeping bag suitable for the weather and a comfortable mat. Cooking device: you may need a portable stove. The video introduction information includes: shopping list recommendation video A, shopping list recommendation video B, and shopping list recommendation video C.

In this case, since the object identification information respectively corresponding to the at least one third recommended object corresponding to the scenario type and the details introduction information corresponding to the scenario type are displayed in the preset region of the interactive interface, while acquiring knowledge through the text introduction information and/or the video introduction information, the user may select the product while viewing the content, which improves the user experience.

It should be noted that before the interactive reply information is displayed in the interactive interface, the interactive reply information may be determined through a neural network model. Correspondingly, specific steps include: searching, through the neural network model, for the reply text information and recommendation information of multiple candidate objects according to the interactive information; and determining, through the neural network model, the recommendation information of the at least one recommended object according to popularity information respectively corresponding to the recommendation information of the multiple candidate objects, and determining the reply text information and the recommendation information of the at least one recommended object as the interactive reply information.

The popularity information is used to represent a degree of popularity of the recommendation information of the candidate object. Optionally, the popularity information may be determined based on one or more of the following information of the candidate object: sales volume, positive review rate, repost volume, collection volume, click volume, and review volume.

In this case, since the interactive reply information is determined through the neural network model, the effectiveness of the interactive reply information is improved, and it is convenient to find, according to the interactive reply information, the object that meets the user's needs, thus improving the user experience.

The embodiment of the present disclosure provides an information display method: displaying interactive reply information in an interactive interface in response to interactive information that is input in the interactive interface, where the interactive reply information includes reply text information and recommendation information of at least one recommended object corresponding to the reply text information, and the recommendation information of the at least one recommended object is determined based on the interactive information and the reply text information. Since the personalized reply text information may be displayed through the interactive information and the reply text information, and since various recommendation information is provided for the user, it is convenient to search for an object that meets the user's needs according to the reply text information and the recommendation information, thus improving the user experience.

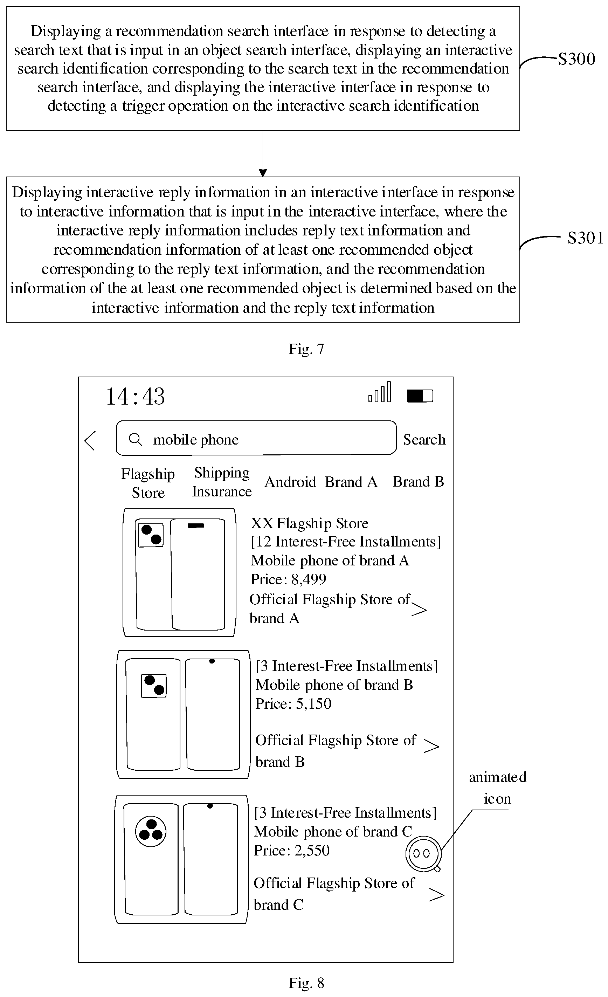

In the embodiment of the present disclosure, the interactive interface may be entered through the interactive search identification. Correspondingly, as shown in Fig. 7, before step S301, the method may further include:
S300, displaying a recommendation search interface in response to detecting a search text that is input in an object search interface, displaying an interactive search identification corresponding to the search text in the recommendation search interface, and displaying the interactive interface in response to detecting a trigger operation on the interactive search identification.

In the embodiment of the present disclosure, the search text may be text information that represents a search intention of a user. Optionally, the search text may include an object, an object type, or a scenario type.

Optionally, the object may be a physical item, for example, a mobile phone of brand A, a lipstick of brand B, a jacket shell of brand C, etc. The object may also be a virtual item, for example, a recharge card of a store XX. Optionally, the object type is used to represent a type to which the object belongs. For example, a mobile phone, a jacket shell, a dining table, etc. Optionally, the scenario type is used to represent any scenario that requires shopping for preparation. For example, camping, mountain climbing, skiing, computer assembly, etc. There may be one or more interactive search identifications corresponding to the search text. In the present embodiment, the number of interactive search identifications is not specifically limited.

In some embodiments, the interactive search identification may be displayed in the recommendation search interface. The recommendation search interface includes multiple pieces of recommendation search information. Correspondingly, the displaying the interactive search identification corresponding to the search text in the recommendation search interface includes: determining interactive information corresponding to the search text, and displaying the interactive search identification corresponding to the search text below an M-th recommendation search text among the multiple pieces of recommendation search information, where M is a positive integer; the interactive search identification includes the interactive information and an interactive search icon, and the interactive search icon is displayed in an image manner or an animation manner.

M is less than the number of the multiple pieces of recommendation search information, and in the present disclosure, a value of M is not specifically limited. Exemplarily, as shown in Fig. 2, M is 2, and the interactive search identification is displayed below the second recommendation search text. The search text is: mobile phone, and the multiple pieces of recommendation search information include: mobile phone, mobile phone stand, mobile phone case, and mobile phone screen protector. The interactive search identification is displayed below the second recommendation search text (mobile phone stand).

It should be noted that, in order to improve the accuracy of search, when the input search text is a specific search term, the interactive search identification is displayed. The specific search term may be a preset search term. For example, mobile phone, refrigerator, lipstick, etc.

Optionally, the interactive search icon is displayed in the image manner or the animation manner, which may create a smart AI (Artificial Intelligence) shopping guide character in terms of interaction and interface style, and improve the decision-making efficiency of the user.

In some other embodiments, the interactive search identification may also be displayed in the search result interface. Correspondingly, the method may further include: displaying the search result interface in response to detecting a trigger operation on any piece of the recommendation search information, and displaying the interactive search identification corresponding to the search text in a preset position of the search result interface. In the present embodiment, the preset position of the search result interface is not specifically limited. Optionally, the preset position may be the upper left, the upper right, the lower left, the lower right, etc. of the search result interface. Exemplarily, as shown in Fig. 8, the preset position is the lower right of the search result interface.

In some embodiments, the interactive information corresponding to the search text may be determined according to the search text. Optionally, the search text is an object, and the interactive information corresponding to the search text is determined as: how about the object. Optionally, the search text is an object type, and the interactive information corresponding to the search text is determined as: how to choose the object type. Optionally, the search text is a scenario type, and the interactive information corresponding to the search text is determined as: what to buy for the scenario type.

Exemplarily, the search text is: a mobile phone of brand A (an object), and the interactive information is: how about the mobile phone of brand A. Exemplarily, the search text is: a jacket shell (an object type), and the interactive information is: how to choose a jacket shell. Exemplarily, the search text is: camping (a scenario type), and the interactive information is: what to buy for camping.

It should be noted that recommendation interactive information may also be displayed in the interactive interface. Correspondingly, the method further includes: displaying at least one piece of recommendation interactive information in the interactive interface; and displaying new interactive reply information in the interactive interface in response to detecting a trigger operation on any piece of the recommendation interactive information.

Exemplarily, as shown in Fig. 4, the recommendation interactive information includes: how is the performance of the A15 chip, and How about the battery life of mobile phone A compared to that of mobile phone B? Exemplarily, as shown in Fig. 5, the recommendation interactive information includes: how to choose the size of the jacket shell, how to choose the fabric of the jacket shell, and how to clean the jacket shell? Exemplarily, as shown in Fig. 6, the recommendation interactive information includes: recommend several lamps that are practical for camping, and what kinds of shoes are better for going camping.

It should be noted that when the purchase intention corresponding to the interactive information is not clear, the interactive reply information may also be displayed in the interactive interface. In this case, the interactive reply information may include the reply text information, or the interactive reply information may include the reply text information and the recommendation interactive information.

In this case, since the recommendation interactive information is displayed in the interactive interface, the user may further acquire relevant information according to the recommendation interactive information, which facilitates the user to find, according to the acquired relevant information, the object that meets the user's needs, thus further improving the user experience.

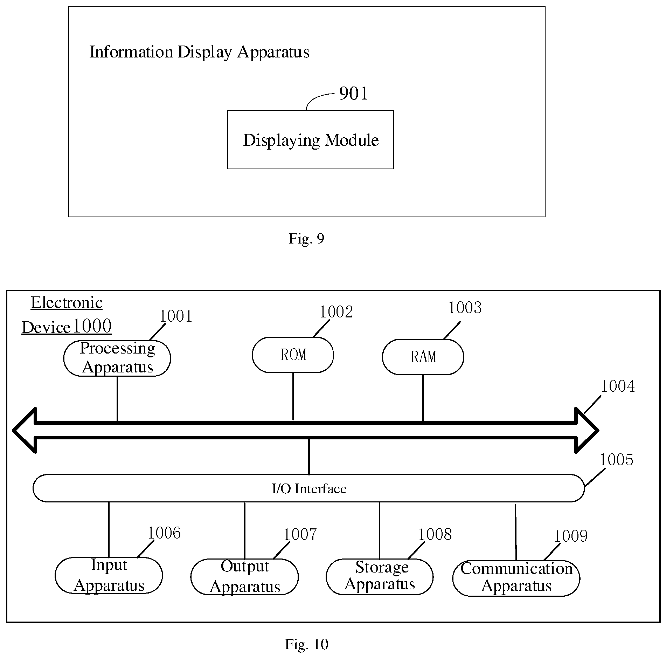

Fig. 9 is a structural block diagram of an information display apparatus according to an embodiment of the present disclosure. Referring to Fig. 9, the apparatus includes: a displaying module 901. The displaying module 901 is configured to display interactive reply information in an interactive interface in response to interactive information that is input in the interactive interface, where the interactive reply information includes reply text information and recommendation information of at least one recommended object corresponding to the reply text information;
where the recommendation information of the at least one recommended object is determined based on the interactive information and the reply text information.

According to one or more embodiments of the present disclosure, the interactive information includes a first recommended object, the recommendation information of the at least one recommended object includes recommendation information corresponding to the first recommended object, and the recommendation information includes a recommendation image and multiple recommendation texts. Correspondingly, the displaying, by the displaying module 901, the interactive reply information in the interactive interface specifically includes: displaying the recommendation information corresponding to the first recommended object in a preset region of the interactive interface, where the recommendation image corresponding to the first recommended object is located in a middle of the preset region, and the multiple recommendation texts corresponding to the first recommended object are located around the recommendation image, each of the recommendation texts corresponds to one piece of attribute information of the first recommended object, and attribute information corresponding to each of the recommendation texts is different.

According to one or more embodiments of the present disclosure, the recommendation information further includes object identification information of the first recommended object. Correspondingly, the displaying module 901 is further configured to: display the object identification information below the preset region; and display an object information interface of the first recommended object in response to detecting a trigger operation on the object identification information, where the object information interface is used to display multiple pieces of object attribute information of the first recommended object.

According to one or more embodiments of the present disclosure, the reply text information includes details introduction information corresponding to the first recommended object. Correspondingly, the displaying module 901 is further configured to: display the details introduction information above the preset region, where the details introduction information includes text introduction information and/or video introduction information; determine a number of lines of the details introduction information if the details introduction information includes the text introduction information, and display, above the preset region, the details introduction information with the number of lines if the number of lines is less than a preset number of lines; display, above the preset region, first N lines of the details introduction information and an expansion identification if the number of lines is greater than or equal to the preset number of lines; display a details introduction interface and display the details introduction information in the details introduction interface in response to detecting a trigger operation on the expansion identification, where N is a positive integer.

According to one or more embodiments of the present disclosure, the interactive information includes an object type, and the recommendation information of the at least one recommended object includes object identification information respectively corresponding to at least two second recommended objects. Correspondingly, the displaying, by the displaying module 901, the interactive reply information in the interactive interface specifically includes: displaying, in the interactive interface, the object identification information respectively corresponding to the at least two second recommended objects; and displaying, in response to detecting a trigger operation on any piece of the object identification information, an object information interface of a second recommended object corresponding to the object identification information, where the object information interface is used to display multiple pieces of object attribute information of the second recommended object.

According to one or more embodiments of the present disclosure, the reply text information includes recommendation text information of each of the second recommended objects and/or details introduction information corresponding to the object type. Correspondingly, the displaying, by the displaying module 901, the interactive reply information in the interactive interface specifically includes: displaying, in a preset region of the interactive interface, the object identification information respectively corresponding to the at least two second recommended objects and the recommendation text information of each of the second recommended objects; or displaying, in the preset region of the interactive interface, the object identification information respectively corresponding to the at least two second recommended objects and the details introduction information corresponding to the object type; or displaying, in the preset region of the interactive interface, the object identification information respectively corresponding to the at least two second recommended objects, the recommendation text information of each of the second recommended objects, and the details introduction information corresponding to the object type. The details introduction information corresponding to the object type is located on an upper portion of the preset region, and the recommendation text information of each of the second recommended objects is located above the object identification information corresponding to the second recommended object.

According to one or more embodiments of the present disclosure, the interactive information includes a scenario type, and the recommendation information of the at least one recommended object includes object identification information respectively corresponding to at least one third recommended object corresponding to the scenario type. Correspondingly, the displaying, by the displaying module 901, the interactive reply information in the interactive interface specifically includes: displaying, in a preset region of the interactive interface, the object identification information respectively corresponding to the at least one third recommended object corresponding to the scenario type; and displaying, in response to detecting a trigger operation on any piece of the object identification information, an object information interface of a third recommended object corresponding to the object identification information, where the object information interface is used to display multiple pieces of object attribute information of the third recommended object.

According to one or more embodiments of the present disclosure, the number of the at least one third recommended object is greater than a preset number, and the displaying module 901 is further configured to: display, in the preset region, object identification information of a preset number of third recommended objects, and switch the displayed object identification information of the preset number of third recommended objects in response to detecting a preset operation on the preset region; and/or the reply text information includes details introduction information corresponding to the scenario type, and correspondingly, the displaying module 901 is further configured to: display, in a details introduction region of the interactive interface, the details introduction information corresponding to the scenario type, where the details introduction information includes text introduction information and/or video introduction information, display the video introduction information in a first region of the details introduction region and/or display the text introduction information in a second region of the details introduction region.

According to one or more embodiments of the present disclosure, the displaying module 901 is further configured to: display a recommendation search interface in response to detecting a search text that is input in an object search interface, display an interactive search identification corresponding to the search text in the recommendation search interface, and display the interactive interface in response to detecting a trigger operation on the interactive search identification.

According to one or more embodiments of the present disclosure, the recommendation search interface includes multiple pieces of recommendation search information. Correspondingly, the displaying, by the displaying module 901, the interactive search identification corresponding to the search text in the recommendation search interface specifically includes: determining interactive information corresponding to the search text, and displaying the interactive search identification corresponding to the search text below an M-th recommendation search text among the multiple pieces of recommendation search information, where M is a positive integer, the interactive search identification includes the interactive information and an interactive search icon, and the interactive search icon is displayed in an image manner or an animation manner; or displaying a search result interface in response to detecting a trigger operation on any piece of the recommendation search information, and displaying the interactive search identification corresponding to the search text in a preset position of the search result interface.

According to one or more embodiments of the present disclosure, the displaying module 901 is further configured to: display at least one piece of recommendation interactive information in the interactive interface, and display new interactive reply information in the interactive interface in response to detecting a trigger operation on any piece of the recommendation interactive information; and/or the apparatus further includes a determining module, the determining module is configured to: before the interactive reply information is displayed in the interactive interface, search for the reply text information and recommendation information of multiple candidate objects according to the interactive information through a neural network model; determine, through the neural network model, the recommendation information of the at least one recommended object according to popularity information respectively corresponding to the recommendation information of the multiple candidate objects; and determine the reply text information and the recommendation information of the at least one recommended object as the interactive reply information.

Reference is made to Fig. 10, which illustrates a schematic diagram of a structure of an electronic device 1000 suitable for implementing the embodiments of the present disclosure. The electronic device 1000 may be a terminal device or a server. The terminal device may include, but is not limited to, mobile terminals such as a mobile phone, a laptop, a digital broadcast receiver, a personal digital assistant (abbreviated as PDA), a tablet computer, a portable media player (abbreviated as PMP), a vehicle-mounted terminal (e.g., a vehicle navigation terminal), etc., and fixed terminals such as a digital TV, a desktop computer, etc. The electronic device shown in Fig. 10 is only an example, and should not impose any limitation on the function and scope of use of the embodiments of the present disclosure.

As shown in Fig. 10, the electronic device 1000 may include a processing apparatus (e.g., a central processing unit, a graphics processor, etc.) 1001, which may perform various appropriate actions and processing according to a program stored in a read-only memory (abbreviated as ROM) 1002 or a program loaded from a storage apparatus 1008 into a random-access memory (abbreviated as RAM) 1003. The RAM 1003 further stores various programs and data required for the operation of the electronic device 1000. The processing apparatus 1001, the ROM 1002, and the RAM 1003 are interconnected by means of a bus 1004. An input/output (I/O) interface 1005 is also connected to the bus 1004.

Usually, the following apparatuses may be connected to the I/O interface 1005: an input apparatus 1006 including, for example, a touch screen, a touchpad, a keyboard, a mouse, a camera, a microphone, an accelerometer, a gyroscope, etc.; an output apparatus 1007 including, for example, a liquid crystal display (Liquid Crystal Display, LCD for short), a speaker, a vibrator, etc.; a storage apparatus 1008 including, for example, a magnetic tape, a hard disk, etc.; and a communication apparatus 1009. The communication apparatus 1009 may allow the electronic device 1000 to perform wireless or wired communication with other devices to exchange data. Although Fig. 10 shows the electronic device 1000 having various apparatuses, it should be understood that not all the apparatuses shown herein need to be implemented or included. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried on a computer-readable medium, where the computer program contains program code for performing the method shown in the flowchart. In such an embodiment, the computer program may be downloaded and installed from a network through the communication apparatus 1009, or installed from the storage apparatus 1008, or installed from the ROM 1002. When the computer program is executed by the processing apparatus 1001, the preceding functions defined in the method of the embodiment of the present disclosure are executed.

It should be noted that the preceding computer-readable medium in the present disclosure may be a computer-readable signal medium, a computer-readable storage medium, or any combination thereof. The computer-readable storage medium may be, for example, but is not limited to, an electrical, magnetic, optical, electromagnetic, infrared, or semiconductor system, apparatus, device, or any combination thereof. More specific examples of the computer-readable storage medium may include, but are not limited to, an electrical connection having one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or used in conjunction with an instruction execution system, apparatus, or device. In the present disclosure, the computer-readable signal medium may include a data signal propagated on a baseband or as a part of a carrier, and computer-readable program code is carried therein. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit the program used by or in conjunction with the instruction execution system, apparatus, or device. The program code contained on the computer-readable medium may be transmitted in any suitable medium, including but not limited to a wire, an optical cable, an RF (radio frequency), or any suitable combination thereof.

The computer-readable medium may be contained in the electronic device or may exist alone without being assembled into the electronic device.

The computer-readable medium carries one or more programs, and when the one or more programs are executed by the electronic device, the electronic device is caused to perform the method shown in the preceding embodiments.

The computer program code for performing the operations of the present disclosure may be written in one or more programming languages or a combination thereof, where the programming languages include object-oriented programming languages such as Java, Smalltalk, and C++, and include conventional procedural programming languages such as "C" language or similar programming languages. The program code may be executed entirely on a user computer, partly on a user computer, as a stand-alone software package, partly on a user computer and partly on a remote computer, or entirely on a remote computer or server. In the case of involving the remote computer, the remote computer may be connected to the user computer through any kind of network, including a local area network (abbreviated as LAN) or a wide area network (abbreviated as WAN), or may be connected to an external computer (e.g., connected through the Internet with the aid of an Internet service provider).

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the block may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by means of software or by means of hardware. The name of a unit does not constitute a limitation on the unit itself under certain circumstances, and for example, the first acquiring unit may also be described as "a unit for acquiring at least two internet protocol addresses".

The functions described herein above may be performed at least partly by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection having one or more wires, a portable computer magnetic disk, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In a first aspect, according to one or more embodiments of the present disclosure, an information display method is provided, including: displaying interactive reply information in an interactive interface in response to interactive information that is input in the interactive interface, where the interactive reply information includes reply text information and recommendation information of at least one recommended object corresponding to the reply text information;

where the recommendation information of the at least one recommended object is determined based on the interactive information and the reply text information.

According to one or more embodiments of the present disclosure, the interactive information includes a first recommended object, the recommendation information of the at least one recommended object includes recommendation information corresponding to the first recommended object, and the recommendation information includes a recommendation image and multiple recommendation texts. Correspondingly, the displaying the interactive reply information in the interactive interface includes: displaying the recommendation information corresponding to the first recommended object in a preset region of the interactive interface, where the recommendation image corresponding to the first recommended object is located in a middle of the preset region, and the multiple recommendation texts corresponding to the first recommended object are located around the recommendation image, each of the recommendation texts corresponds to one piece of attribute information of the first recommended object, and attribute information corresponding to each of the recommendation texts is different.

According to one or more embodiments of the present disclosure, the recommendation information further includes object identification information of the first recommended object. Correspondingly, the method further includes: displaying the object identification information below the preset region; and displaying an object information interface of the first recommended object in response to detecting a trigger operation on the object identification information, where the object information interface is used to display multiple pieces of object attribute information of the first recommended object.

According to one or more embodiments of the present disclosure, the reply text information includes details introduction information corresponding to the first recommended object. Correspondingly, the method further includes: displaying the details introduction information above the preset region, where the details introduction information includes text introduction information and/or video introduction information; determining a number of lines of the details introduction information if the details introduction information includes the text introduction information, displaying, above the preset region, the details introduction information with the number of lines if the number of lines is less than a preset number of lines, and displaying, above the preset region, first N lines of the details introduction information and an expansion identification if the number of lines is greater than or equal to the preset number of lines, and displaying a details introduction interface and displaying the details introduction information in the details introduction interface in response to detecting a trigger operation on the expansion identification, where N is a positive integer.

According to one or more embodiments of the present disclosure, the interactive information includes an object type, and the recommendation information of the at least one recommended object includes object identification information respectively corresponding to at least two second recommended objects. Correspondingly, the displaying the interactive reply information in the interactive interface includes: displaying, in the interactive interface, the object identification information respectively corresponding to the at least two second recommended objects; and displaying, in response to detecting a trigger operation on any piece of the object identification information, an object information interface of a second recommended object corresponding to the object identification information, where the object information interface is used to display multiple pieces of object attribute information of the second recommended object.

According to one or more embodiments of the present disclosure, the reply text information includes recommendation text information of each of the second recommended objects and/or details introduction information corresponding to the object type. Correspondingly, the displaying the interactive reply information in the interactive interface includes: displaying, in a preset region of the interactive interface, the object identification information respectively corresponding to the at least two second recommended objects and the recommendation text information of each of the second recommended objects; or displaying, in the preset region of the interactive interface, the object identification information respectively corresponding to the at least two second recommended objects and the details introduction information corresponding to the object type; or displaying, in the preset region of the interactive interface, the object identification information respectively corresponding to the at least two second recommended objects, the recommendation text information of each of the second recommended objects, and the details introduction information corresponding to the object type. The details introduction information corresponding to the object type is located on an upper portion of the preset region, and the recommendation text information of each of the second recommended objects is located above the object identification information corresponding to the second recommended object.

According to one or more embodiments of the present disclosure, the interactive information includes a scenario type, and the recommendation information of the at least one recommended object includes object identification information respectively corresponding to at least one third recommended object corresponding to the scenario type. Correspondingly, the displaying the interactive reply information in the interactive interface includes: displaying, in a preset region of the interactive interface, the object identification information respectively corresponding to the at least one third recommended object corresponding to the scenario type; and displaying, in response to detecting a trigger operation on any piece of the object identification information, an object information interface of a third recommended object corresponding to the object identification information, where the object information interface is used to display multiple pieces of object attribute information of the third recommended object.

According to one or more embodiments of the present disclosure, the number of the at least one third recommended object is greater than a preset number, and the method further includes: displaying, in the preset region, object identification information of a preset number of third recommended objects, and switching the displayed object identification information of the preset number of third recommended objects in response to detecting a preset operation on the preset region; and/or the reply text information includes details introduction information corresponding to the scenario type, and correspondingly, the method further includes: displaying, in a details introduction region of the interactive interface, the details introduction information corresponding to the scenario type, where the details introduction information includes text introduction information and/or video introduction information, displaying the video introduction information in a first region of the details introduction region and/or displaying the text introduction information in a second region of the details introduction region.

According to one or more embodiments of the present disclosure, before the displaying interactive reply information in an interactive interface in response to interactive information that is input in the interactive interface, the method further includes: displaying a recommendation search interface in response to detecting a search text that is input in an object search interface, displaying an interactive search identification corresponding to the search text in the recommendation search interface, and displaying the interactive interface in response to detecting a trigger operation on the interactive search identification.

According to one or more embodiments of the present disclosure, the recommendation search interface includes multiple pieces of recommendation search information. Correspondingly, the displaying the interactive search identification corresponding to the search text in the recommendation search interface includes: determining interactive information corresponding to the search text, and displaying the interactive search identification corresponding to the search text below an M-th recommendation search text among the multiple pieces of recommendation search information, where M is a positive integer, the interactive search identification includes the interactive information and an interactive search icon, and the interactive search icon is displayed in an image manner or an animation manner; or displaying a search result interface in response to detecting a trigger operation on any piece of the recommendation search information, and displaying the interactive search identification corresponding to the search text in a preset position of the search result interface.

According to one or more embodiments of the present disclosure, the method further includes: displaying at least one piece of recommendation interactive information in the interactive interface, and displaying new interactive reply information in the interactive interface in response to detecting a trigger operation on any piece of the recommendation interactive information; and/or before displaying interactive reply information in the interactive interface, the method further includes: searching for the reply text information and recommendation information of multiple candidate objects according to the interactive information through a neural network model, determining the recommendation information of the at least one recommended object according to popularity information respectively corresponding to the recommendation information of the multiple candidate objects through the neural network model, and determining the reply text information and the recommendation information of the at least one recommended object as the interactive reply information.

In a second aspect, according to one or more embodiments of the present disclosure, an information display apparatus is provided, including: a displaying module, configured to display interactive reply information in an interactive interface in response to interactive information that is input in the interactive interface, where the interactive reply information includes reply text information and recommendation information of at least one recommended object corresponding to the reply text information;
where the recommendation information of the at least one recommended object is determined based on the interactive information and the reply text information.

According to one or more embodiments of the present disclosure, the interactive information includes a first recommended object, the recommendation information of the at least one recommended object includes recommendation information corresponding to the first recommended object, and the recommendation information includes a recommendation image and multiple recommendation texts. Correspondingly, the displaying, by the displaying module, the interactive reply information in the interactive interface specifically includes: displaying the recommendation information corresponding to the first recommended object in a preset region of the interactive interface, where the recommendation image corresponding to the first recommended object is located in a middle of the preset region, and the multiple recommendation texts corresponding to the first recommended object are located around the recommendation image, each of the recommendation texts corresponds to one piece of attribute information of the first recommended object, and attribute information corresponding to each of the recommendation texts is different.

According to one or more embodiments of the present disclosure, the recommendation information further includes object identification information of the first recommended object. Correspondingly, the displaying module is further configured to: display the object identification information below the preset region; and display an object information interface of the first recommended object in response to detecting a trigger operation on the object identification information, where the object information interface is used to display multiple pieces of object attribute information of the first recommended object.

According to one or more embodiments of the present disclosure, the reply text information includes details introduction information corresponding to the first recommended object. Correspondingly, the displaying module is further configured to: display the details introduction information above the preset region, where the details introduction information includes text introduction information and/or video introduction information; determine a number of lines of the details introduction information if the details introduction information includes the text introduction information, and display, above the preset region, the details introduction information with the number of lines if the number of lines is less than a preset number of lines; display, above the preset region, first N lines of the details introduction information and an expansion identification if the number of lines is greater than or equal to the preset number of lines; display a details introduction interface and display the details introduction information in the details introduction interface in response to detecting a trigger operation on the expansion identification, where N is a positive integer.

According to one or more embodiments of the present disclosure, the interactive information includes an object type, and the recommendation information of the at least one recommended object includes object identification information respectively corresponding to at least two second recommended objects. Correspondingly, the displaying, by the displaying module, the interactive reply information in the interactive interface specifically includes: displaying, in the interactive interface, the object identification information respectively corresponding to the at least two second recommended objects; and displaying, in response to detecting a trigger operation on any piece of the object identification information, an object information interface of a second recommended object corresponding to the object identification information, where the object information interface is used to display multiple pieces of object attribute information of the second recommended object.

According to one or more embodiments of the present disclosure, the reply text information includes recommendation text information of each of the second recommended objects and/or details introduction information corresponding to the object type. Correspondingly, the displaying, by the displaying module, the interactive reply information in the interactive interface specifically includes: displaying, in a preset region of the interactive interface, the object identification information respectively corresponding to the at least two second recommended objects and the recommendation text information of each of the second recommended objects; or displaying, in the preset region of the interactive interface, the object identification information respectively corresponding to the at least two second recommended objects and the details introduction information corresponding to the object type; or displaying, in the preset region of the interactive interface, the object identification information respectively corresponding to the at least two second recommended objects, the recommendation text information of each of the second recommended objects, and the details introduction information corresponding to the object type. The details introduction information corresponding to the object type is located on an upper portion of the preset region, and the recommendation text information of each of the second recommended objects is located above the object identification information corresponding to the second recommended object.

According to one or more embodiments of the present disclosure, the interactive information includes a scenario type, and the recommendation information of the at least one recommended object includes object identification information respectively corresponding to at least one third recommended object corresponding to the scenario type. Correspondingly, the displaying, by the displaying module, the interactive reply information in the interactive interface specifically includes: displaying, in a preset region of the interactive interface, the object identification information respectively corresponding to the at least one third recommended object corresponding to the scenario type; and displaying, in response to detecting a trigger operation on any piece of the object identification information, an object information interface of a third recommended object corresponding to the object identification information, where the object information interface is used to display multiple pieces of object attribute information of the third recommended object.

According to one or more embodiments of the present disclosure, the number of the at least one third recommended object is greater than a preset number, and the displaying module is further configured to: display, in the preset region, object identification information of a preset number of third recommended objects, and switch the displayed object identification information of the preset number of third recommended objects in response to detecting a preset operation on the preset region; and/or the reply text information includes details introduction information corresponding to the scenario type, and correspondingly, the displaying module is further configured to: display, in a details introduction region of the interactive interface, the details introduction information corresponding to the scenario type, where the details introduction information includes text introduction information and/or video introduction information, display the video introduction information in a first region of the details introduction region and/or display the text introduction information in a second region of the details introduction region.

According to one or more embodiments of the present disclosure, the displaying module is further configured to: display a recommendation search interface in response to detecting a search text that is input in an object search interface, display an interactive search identification corresponding to the search text in the recommendation search interface, and display the interactive interface in response to detecting a trigger operation on the interactive search identification.

According to one or more embodiments of the present disclosure, the recommendation search interface includes multiple pieces of recommendation search information. Correspondingly, the displaying, by the displaying module, the interactive search identification corresponding to the search text in the recommendation search interface specifically includes: determining interactive information corresponding to the search text, and displaying the interactive search identification corresponding to the search text below an M-th recommendation search text among the multiple pieces of recommendation search information, where M is a positive integer, the interactive search identification includes the interactive information and an interactive search icon, and the interactive search icon is displayed in an image manner or an animation manner; or displaying a search result interface in response to detecting a trigger operation on any piece of the recommendation search information, and displaying the interactive search identification corresponding to the search text in a preset position of the search result interface.

According to one or more embodiments of the present disclosure, the displaying module is further configured to: display at least one piece of recommendation interactive information in the interactive interface, and display new interactive reply information in the interactive interface in response to detecting a trigger operation on any piece of the recommendation interactive information; and/or the apparatus further includes a determining module, the determining module is configured to: before the interactive reply information is displayed in the interactive interface, search for the reply text information and recommendation information of multiple candidate objects according to the interactive information through a neural network model; determine, through the neural network model, the recommendation information of the at least one recommended object according to popularity information respectively corresponding to the recommendation information of the multiple candidate objects; and determine the reply text information and the recommendation information of the at least one recommended object as the interactive reply information.

In a third aspect, according to one or more embodiments of the present disclosure, an electronic device is provided, including: a processor, and a memory communicatively connected to the processor;
the memory stores a computer-executable instruction; and
the processor executes the computer-executable instruction stored in the memory to implement the information display method according to the above first aspect and various possible designs of the first aspect.

In a fourth aspect, according to one or more embodiments of the present disclosure, a computer-readable storage medium is provided, where a computer-executable instruction is stored in the computer-readable storage medium, and when the computer-executable instruction is executed by a processor, the information display method according to the above first aspect and various possible designs of the first aspect is implemented.

In a fifth aspect, an embodiment of the present disclosure provides a computer program product, including a computer program, and when the computer program is executed by a processor, the information display method according to the above first aspect and various possible designs of the first aspect is implemented.

The above description only illustrates preferred embodiments of the present disclosure and applied technical principles. Those skilled in the art should understand that the disclosed scope involved in the present disclosure is not limited to the technical solutions formed by the specific combination of the above technical features, and should also cover other technical solutions formed by any combination of the above technical features or their equivalent features without departing from the above disclosed concept. For example, the above features and the technical features provided in the present disclosure (but not limited to) with similar functions may be replaced each other to form a technical solution.

In addition, although the operations have been described in a particular order, this should not be understood as requiring these operations to be performed in the particular order as shown or in a sequential order. Under certain circumstances, multitasking and parallel processing may be beneficial. Similarly, although several specific implementation details are included in the above discussion, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the present subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. An information display method, comprising:
displaying interactive reply information in an interactive interface in response to interactive information that is input in the interactive interface, wherein the interactive reply information comprises reply text information and recommendation information of at least one recommended object corresponding to the reply text information;
wherein the recommendation information of the at least one recommended object is determined based on the interactive information and the reply text information.

2. The method of claim 1, wherein the interactive information comprises a first recommended object, and the recommendation information of the at least one recommended object comprises recommendation information corresponding to the first recommended object, wherein the recommendation information comprises a recommendation image and a plurality of recommendation texts;
wherein displaying the interactive reply information in the interactive interface comprises:
displaying the recommendation information corresponding to the first recommended object in a preset region of the interactive interface,
wherein the recommendation image corresponding to the first recommended object is located in a middle of the preset region, and the plurality of recommendation texts corresponding to the first recommended object are located around the recommendation image,
wherein each of the plurality of recommendation texts corresponds to one piece of attribute information of the first recommended object, and attribute information corresponding to each of the plurality of recommendation texts is different.

3. The method of claim 2, wherein the recommendation information further comprises object identification information of the first recommended object, and the method further comprises:
displaying the object identification information below the preset region; and
displaying an object information interface of the first recommended object in response to detecting a trigger operation on the object identification information, wherein the object information interface is used to display a plurality of pieces of object attribute information of the first recommended object.

4. The method of claim 2, wherein the reply text information comprises details introduction information corresponding to the first recommended object, and the method further comprises:
displaying the details introduction information above the preset region, wherein the details introduction information comprises text introduction information and/or video introduction information; and
determining, in response to the details introduction information comprising the text introduction information, a number of lines of the details introduction information, displaying, above the preset region, the details introduction information with the number of lines in response to the number of lines being less than a preset number of lines, and displaying, above the preset region, first N lines of the details introduction information and an expansion identification in response to the number of lines being greater than or equal to the preset number of lines, and displaying a details introduction interface and displaying the details introduction information in the details introduction interface in response to detecting a trigger operation on the expansion identification, wherein N is a positive integer.

5. The method of claim 1, wherein the interactive information comprises an object type, and the recommendation information of the at least one recommended object comprises object identification information respectively corresponding to at least two second recommended objects;
wherein displaying the interactive reply information in the interactive interface comprises:
displaying, in the interactive interface, the object identification information respectively corresponding to the at least two second recommended objects; and
displaying, in response to detecting a trigger operation on any piece of the object identification information, an object information interface of a second recommended object corresponding to the object identification information, wherein the object information interface is used to display a plurality of pieces of object attribute information of the second recommended object.

6. The method of claim 5, wherein the reply text information comprises recommendation text information of each of the second recommended objects and/or details introduction information corresponding to the object type;
wherein displaying the interactive reply information in the interactive interface comprises:
displaying, in a preset region of the interactive interface, the object identification information respectively corresponding to the at least two second recommended objects and the recommendation text information of each of the second recommended objects; or
displaying, in the preset region of the interactive interface, the object identification information respectively corresponding to the at least two second recommended objects and the details introduction information corresponding to the object type; or
displaying, in the preset region of the interactive interface, the object identification information respectively corresponding to the at least two second recommended objects, the recommendation text information of each of the second recommended objects, and the details introduction information corresponding to the object type,
wherein the details introduction information corresponding to the object type is located on an upper portion of the preset region, and the recommendation text information of each of the second recommended objects is located above the object identification information corresponding to the second recommended object.

7. The method of claim 1, wherein the interactive information comprises a scenario type, and the recommendation information of the at least one recommended object comprises object identification information respectively corresponding to at least one third recommended object corresponding to the scenario type;
wherein displaying the interactive reply information in the interactive interface comprises:
displaying, in a preset region of the interactive interface, the object identification information respectively corresponding to the at least one third recommended object corresponding to the scenario type; and
displaying, in response to detecting a trigger operation on any piece of the object identification information, an object information interface of a third recommended object corresponding to the object identification information, wherein the object information interface is used to display a plurality of pieces of object attribute information of the third recommended object.

8. The method of claim 7, wherein a number of the at least one third recommended object is greater than a preset number, and the method further comprises:
displaying, in the preset region, object identification information of a preset number of third recommended objects, and switching the displayed object identification information of the preset number of third recommended objects in response to detecting a preset operation on the preset region; and/or
the reply text information comprises details introduction information corresponding to the scenario type, and the method further comprises: displaying, in a details introduction region of the interactive interface, the details introduction information corresponding to the scenario type, wherein the details introduction information comprises text introduction information and/or video introduction information; and displaying the video introduction information in a first region of the details introduction region and/or displaying the text introduction information in a second region of the details introduction region.

9. The method of any one of claims 1 to 8, wherein before displaying the interactive reply information in the interactive interface in response to the interactive information that is input in the interactive interface, the method further comprises:
displaying a recommendation search interface in response to detecting a search text that is input in an object search interface, displaying an interactive search identification corresponding to the search text in the recommendation search interface, and displaying the interactive interface in response to detecting a trigger operation on the interactive search identification.

10. The method of claim 9, wherein the recommendation search interface comprises a plurality of pieces of recommendation search information, and displaying the interactive search identification corresponding to the search text in the recommendation search interface comprises:
determining interactive information corresponding to the search text, and displaying the interactive search identification corresponding to the search text below an M-th recommendation search text among the plurality of pieces of recommendation search information, wherein M is a positive integer, the interactive search identification comprises the interactive information and an interactive search icon, and the interactive search icon is displayed in an image manner or an animation manner; or
displaying a search result interface in response to detecting a trigger operation on any piece of the recommendation search information, and displaying the interactive search identification corresponding to the search text in a preset position of the search result interface.

11. The method of any one of claims 1 to 10, further comprising:
displaying at least one piece of recommendation interactive information in the interactive interface, and displaying new interactive reply information in the interactive interface in response to detecting a trigger operation on any piece of the recommendation interactive information; and/or
before displaying the interactive reply information in the interactive interface, the method further comprises: searching for the reply text information and recommendation information of a plurality of candidate objects according to the interactive information through a neural network model, determining the recommendation information of the at least one recommended object according to popularity information respectively corresponding to the recommendation information of the plurality of candidate objects through the neural network model, and determining the reply text information and the recommendation information of the at least one recommended object as the interactive reply information.

12. An information display apparatus, comprising:
a displaying module, configured to display interactive reply information in an interactive interface in response to interactive information that is input in the interactive interface, wherein the interactive reply information comprises reply text information and recommendation information of at least one recommended object corresponding to the reply text information;
wherein the recommendation information of the at least one recommended object is determined based on the interactive information and the reply text information.

13. An electronic device, comprising a processor and a memory communicatively connected to the processor,
wherein the memory is configured to store a computer-executable instruction; and
the processor is configured to execute the computer-executable instruction stored in the memory to implement the information display method of any one of claims 1 to 11.

14. A computer-readable storage medium comprising a computer-executable instruction stored therein, wherein the computer-executable instruction, when executed by a processor, is configured to cause the processor to implement the information display method of any one of claims 1 to 11.

15. A computer program product, comprising a computer program, wherein the computer program, when executed by a processor, is configured to cause the processor to implement the information display method of any one of claims 1 to 11.
